**Europäisches Patentamt**

**European Patent Office**

**Office européen des brevets**

(19)

(11) Publication number : **0 301 696 B1**

## (12) EUROPEAN PATENT SPECIFICATION

(45) Date of publication of patent specification :
29.04.92 Bulletin 92/18

(51) Int. Cl.⁵ : **B62L 1/12**

(21) Application number : **88305599.8**

(22) Date of filing : **20.06.88**

(54) **Caliper brake.**

(30) Priority : **20.07.87 JP 111042/87**

(43) Date of publication of application :
**01.02.89 Bulletin 89/05**

(45) Publication of the grant of the patent :
**29.04.92 Bulletin 92/18**

(84) Designated Contracting States :
**AT DE FR GB IT**

(56) References cited :
**DE-A- 3 035 169**
**FR-A- 964 479**
**US-A- 4 064 972**
**US-A- 4 305 482**

(73) Proprietor : **Sato, Masataro**
**191-banchi Ooaza Ikenobe Miki-cho**
**Kita-gun Kanagawa-ken (JP)**

(72) Inventor : **Sato, Masataro**
**191-banchi Ooaza Ikenobe Miki-cho**
**Kita-gun Kanagawa-ken (JP)**

(74) Representative : **Cheyne, John Robert**
**Alexander Mackenzie et al**
**HASELTINE LAKE & CO. 28 Southampton**
**Buildings Chancery Lane**
**London WC2A 1AT (GB)**

## Description

This invention relates to a caliper brake for a vehicle, mounted on a body frame of the vehicle and operable in response to the operation of an actuation member on the vehicle body frame via a brake cable to apply a braking force to a wheel carried on the frame, said caliper brake comprising a pair of operating members disposed so as to straddle the wheel and provided with respective pads and a stationary support shaft disposed on the frame to carry said pair of operating members pivotably thereon, wherein said pads on the operating members are normally biased by a resilient member in directions away from opposite side surfaces of the wheel and are capable of coming into frictional sliding contact with said opposite side surfaces upon operation of said actuation member, one of the operating members being connected with an end of an outer cable and the other operating member being connected with an end of an inner cable projecting from said outer cable.

In a conventional caliper brake of this kind, the pivotal movements of two operating members relative to the vehicle body frame which carries a wheel are not restricted or determined, and only the distance between two pads is determined generally on the basis of the distance between the end portions of the outer and inner cables (refer to, for example, DE-A-30 35 169, FR-A-964,479, JP-A-257381/1986), or only the movements of the operating members relative to each other are determined (see U.S. Patent No. 4,064,972). Hence, pivoting movements of the members around their support means are liable to cause a change or inequality in the distances between the pads and the wheel after assembly to the body frame.

In addition, the distance between the two pads in this conventional caliper brake is comparatively large before the caliper brake is installed on, for example, a bicycle. Therefore, the distances between the pads and a wheel are also comparatively large when the caliper brake is installed on the wheel, so that it is difficult to set the pads close to the wheel while maintaining the distances between the pads and wheel at an equal level. Consequently, the distances between the pads and wheel may sometimes become unequal when the caliper brake has been installed in place. This would cause a braking by only one side pad to occur when the brake force is applied. In this case, the difference in the amount of wear between the two pads would be remarkable, making it difficult to obtain an effective braking action.

Moreover, with the conventional caliper brakes, a torsional spring of a relatively large spring force is disposed between the two operating members to urge the operating members to move away from each other. This requires a comparatively large force for effecting the braking and, when mounted on bicycles for little children, it is difficult for the infants to perform braking operation.

The present invention has been accomplished against the above background to provide a caliper brake capable of adjusting the positions of pads easily so that they come into slide contact with the wheel after moving an equal distance.

Another object of this invention is to provide a caliper brake which can be constructed so as to be operated with a relatively small force.

According to the present invention, the brake is further provided with restriction means, the restriction means comprising restriction recesses provided on the respective operating members and a restriction portion formed integrally with the body frame and inserted through said restriction recesses said restriction portion and said restriction recesses being placed in abutment against each other when the braking force to the wheel has been released such that the restriction means restricts pivotal movements of the operating members in directions in which the pads are moved away from one another and such that the restriction means determines positions of said pair of operating members relative to said vehicle body frame upon release of a braking force applied by the operating members.

Owing to the above construction, the distances between the two pads and the wheel at the time of release of the braking force can be set equal to each other according to the width of the wheel and it is possible to set the distances between each pad and the wheel to equal values by a slight adjustment, thus the occurrence of braking by only one side pad can be prevented, to minimize uneven wear in the pads.

Preferably, the two operating members have connecting arms that are connected with the outer cable and the inner cable and in which a spring having a relatively small force to urge the operating members away from each other is formed in a coil shape surrounding the inner cable and disposed between the connecting arms.

The above feature makes it possible to restrict the maximum distance between the pads by the restricting means and therefore reduce the set load of the spring. This in turn permits the use of a relatively weak coil spring, allowing the braking operation to be performed with a relatively small force.

These and other objects, features and advantages of this invention will become apparent from the following description of the preferred embodiments with reference to the attached drawings, in which:-

Figures 1 through 3 show one embodiment of this invention, Figure 1 being an elevational view of the caliper brake of this invention mounted on a bicycle, Figure 2 an exploded perspective view of the caliper brake, Figure 3 a sectioned elevational view of an essential part;

Figures 4 and 5 represent another embodiment of this invention, Figure 4 being an exploded perspective view corresponding to Figure 2, Figure 5 a sectioned elevational view corresponding to Figure 3;

Figures 6 and 7 show still another embodiment of this invention, Figure 6 being an elevational view corresponding to Figure 1, Figure 7 an exploded perspective view corresponding to Figure 2.

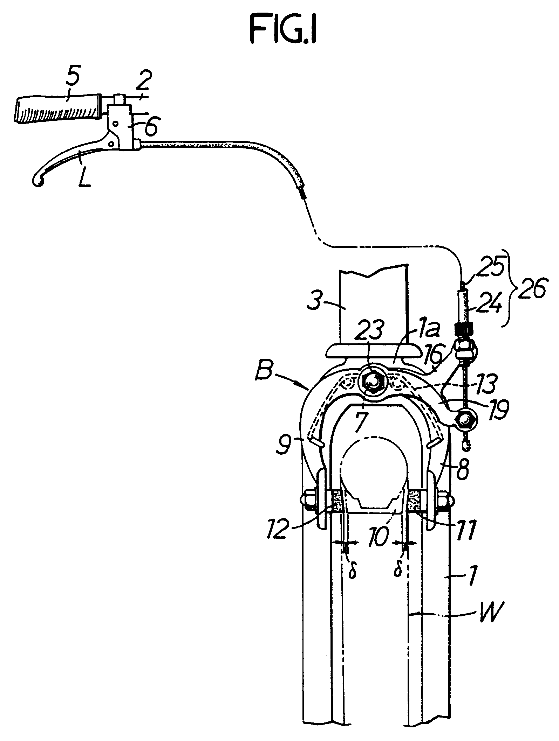

The embodiments of the present invention will now be described with reference to the drawings. First, referring to Fig. 1 which illustrates a first embodiment of the present invention, a caliper brake is set on a base portion 1a of a front fork 1, on which a front wheel W of a bicycle is supported, so as to straddle the front wheel W. This caliper brake B is adapted to be operated in accordance with the operation of a brake lever L as an actuating lever pivotably provided on one end portion of a steering handle 2.

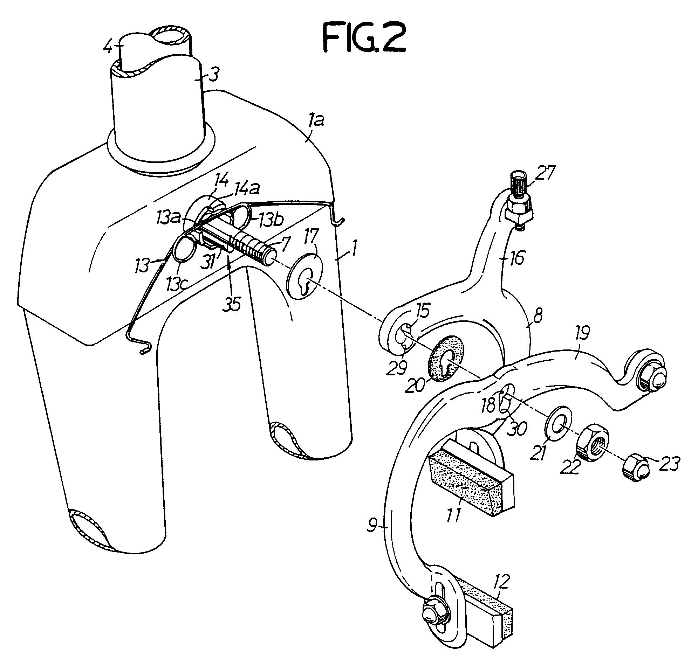

Referring to Figure 2 is addition to Figure 1, a handle post 4 is turnably supported in a head pipe 3 at the front portion of a body frame of the bicycle. The base portion 1a of the front fork 1 is joined to the lower end of this handle post 4, and the steering handle 2 is joined to the upper end thereof. A grip 5 is provided at one end of the steering handle 2, and the brake lever L is supported by a support member 6 fixed to the steering handle 2 at the position close to the grip 5 so that the lever L can be turned away from and toward the grip 5.

The caliper brake B comprises a support shaft 7 fixed to the base portion 1a of the front fork 1, a pair of operating members 8, 9 pivotably supported on the support shaft 7 so as to straddle the front wheel W, rubber pads 11, 12 fixed to the operating members 8, 9, respectively, and adapted to slidingly ccntact with a rim 10 on the opposite side surfaces of the front wheel W, and a spring 13 as a biasing means urging the operating members 8, 9 in directions in which the pads 11, 12 are moved away from the side surfaces of the rim 10.

A large diameter portion 14 which contacts with the front surface of the base portion 1a of the front fork 1 is formed integrally with the support shaft 7 at its intermediate portion. The support shaft 7 is inserted through the base portion 1a until its large-diameter portion 14 comes into contact with the front surface of the base portion 1a. The support shaft 7 is fixed to the base portion 1a by screwing a nut (not shown) to the rear end of the shaft 7 projecting from the rear surface of the base portion 1a.

One operating member 8 is formed arcuately, provided at its base end portion with a support hole 15 through which the support shaft 7 is inserted, and at its free end portion with the pad 11 such that the position of the pad 11 can be vertically adjusted. The operating member 8 is also provided with a connecting arm 16 formed integrally therewith to extend from the outer surface of an intermediate portion of the operating member 8 in the outward direction. This operating member 8 is supported on the support shaft 7 with a washer 17 interposed between the operating member 8 and large-diameter portion 14.

The other operating member 9 is formed so that it extends arcuately to the opposite side of the above-mentioned operating member 8. The operating member 9 is provided at its base end portion with a support hole 18 through which the support shaft 7 is inserted, and at its free end portion with pad 12 such that the position of the pad 12 can be vertically adjusted. The operating member 9 is further provided with a connecting arm 19 formed integrally therewith so that the free end of the connecting arm 19 is positioned below the connecting arm 16 of the operating member 8. The operating member 9 is supported on the support shaft 7 with a washer 20 of a synthetic resin interposed between the operating members 9, 8 so that these operating members 9, 8 can be turned smoothly with respect to each other.

A nut 22 and a cap nut 23 are engaged with the end portion of the support shaft 7 projecting from the operating member 9, via a washer 21 interposed between the operating member 9 and nut 22. Accordingly, the two operating members 8, 9 are supported on the support shaft 7 so that the operating members 8, 9 can be turned relatively to each other between the large-diameter portion 14 and nut 22.

The spring 13 is a torsion spring having twisted portions 13b, 13c at both sides of an intermediate support portion 13a. The support portion 13a is engaged with a notch 14a formed in the large-diameter portion 14 of the support shaft 7, and the free end sections of the two twisted portions 13b, 13c are engaged with the two operating members 8, 9. Owing to this construction, these operating members 8, 9 are urged in the direction in which the pads 11, 12 are turned away from the rim 10 of the front wheel W.

The brake lever L and caliper brake B are operatively connected via a brake cable 26 which comprises an outer cable 24 and an inner cable 25 movably inserted in the outer cable 24.

One end of the outer cable 24 is connected to the support member 6, and one end, which projects from the same end of the outer cable 24, of the inner cable 25 to the brake lever L. An adjuster 27 is screwed to a free end portion of the connecting arm 16 of the operating member 8 in a manner that the adjuster 27 can be axially moved. The other end of the outer cable 24 is fitted in the adjuster 27. The other end, which projects from this end of the outer cable 24, of the inner cable 25 is inserted through the adjuster 27 and joined to the free end of the connecting arm 19 of the operating member 9. Accordingly, when the brake lever L is operated, the inner cable 25 is drawn, so that the connecting arm 16 is pressed down together with pulled-up motion of the connecting arm 19, as known in this kind of brake cable. Consequently, the operating members 8, 9 are turned in the direction in which the pads 11, 12 come into sliding contact with the rim 10, so that a braking force is obtained.

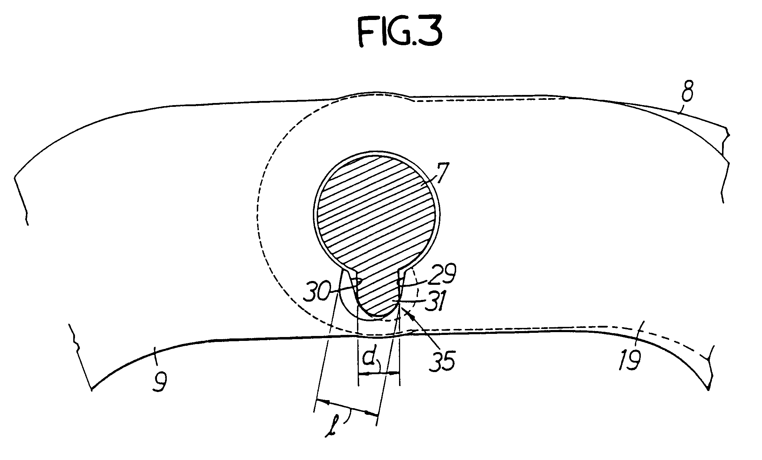

Referring also to Figure 3, the caliper brake B has a restricting means 35 which determines the maximum distance between the two pads 11, 12 on the operating members 8, 9. The restricting means 35 comprises: a restriction hole 29 bored in the base portion of the first operating member 8 in such a way as to be continuous with the lower part of the support hole 15; a restriction hole 30 bored in the base portion of the second operating member 9 in such a way as to be continuous with the lower part of the support hole 18; and a restriction portion 31 raised on the external surface of the support shaft 7 and extending along, but deviated from, the axis of the shaft 7, the restriction portion 31 being inserted through the restriciton holes 29, 30.

The restriction holes 29, 30 are so formed that their lengths $\ell$ along circumference of the support shaft 7 is greater than the width d of the restriction portion 31. In the state that the two operating members 8, 9 are urged by the spring 13 applied with no other external force, i.e., that the restriction portion 31 is in contact with one circumferential side of the first restriction hole 29 and with the other circumferential side of the second restriction hole 30, the distances $\delta$ between the rim 10 and each of the pads 11, 12 are equal. That is, the maximum values of the distances $\delta$ between the rim 10 and each of the pads 11, 12 are determined by the two restriction holes 29, 30 and the restriction portion 31.

Next, the operation of this embodiment will be described. Since the restriction portion 31 is inserted into the two restriction holes 29, 30, the maximum pivoting positions to which the two operating members 8, 9 can be pivoted by the spring 13 are determined. By appropriately choosing the positions of the restriction holes 29, 30, it is possible to set the maximum distance between the two pads 11 and 12 according to the width of the wheel W. The distance between the pads 11 and 12 is set slightly larger than the width of the rim 10 of the wheel W.

When the caliper brake B set in the above described manner is mounted on a bicycle, the distances $\delta$ between each pad 11, 12 and the opposite sides of the rim 10 are comparatively small. Thus, it is easy to set both the distances $\delta$ equal when mounting the brake on the bicycle. Setting of the caliper brake B is completed by merely reducing and adjusting the distance between the free ends of the connecting arms 16 and 19 to a small extent. Owing to this arrangement, the distances $\delta$ between the rim 10 and each of the pads 11, 12 are equal at the time of completion of a brake-setting operation. When the brake is operated, the two pads 11, 12 come into sliding contact with the rim 10 under equal pressures, providing reliable braking effect. This enables the braking only by one side pad to be prevented reliably.

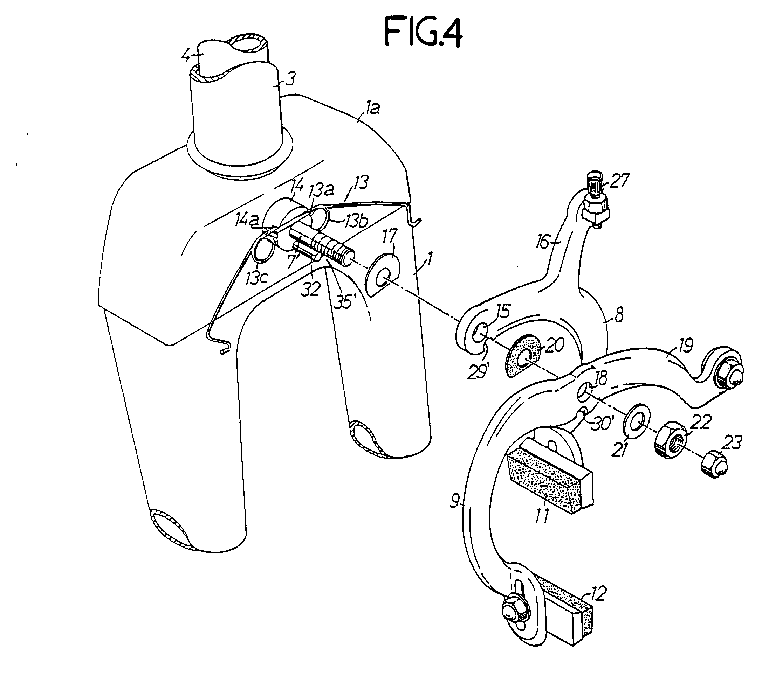

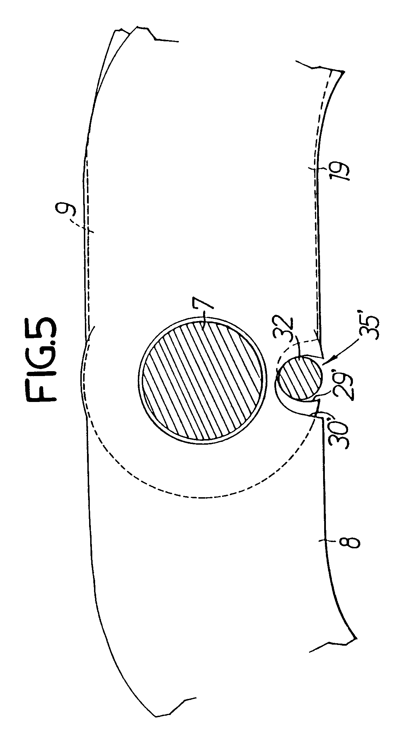

Figures 4 and 5 show another embodiment of this invention with like reference numbers attached to the corresponding parts of the first embodiment.

A restriction means 35' that determines the maximum pivoting movements in a direction in which the pads 11, 12 of the two operating members 8, 9 are moved away from each other has restriction holes 29', 30' bored in the operating members 8, 9 and a restriction portion 32 provided to the support shaft 7'. The restriction holes 29', 30' are bored in the operating members 8, 9 in such a way that they are independent of the support holes 15, 18 with, for instance, a part of the side surfaces of the restriction holes 29', 30' open. The restriction portion 32 is axially projected from the large-diameter portion 14 of the support shaft 7' at the position deviated from the axis thereof. The restriction portion 32 is inserted into the two restriction holes 29', 30'.

The second embodiment can provide the same effect as the first embodiment.

The restriction portion and the restriction holes may be positioned anywhere along the circumferental direction of the support shaft 7'.

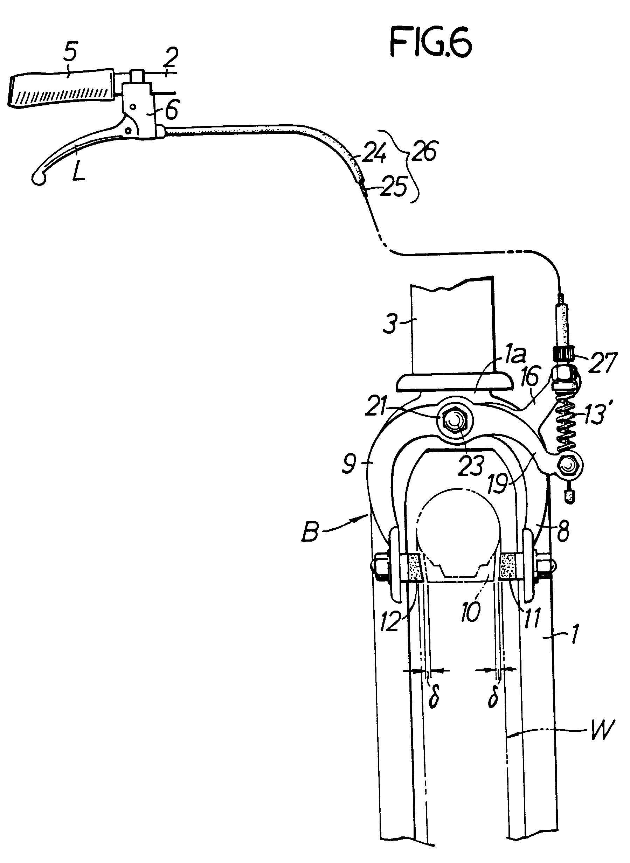

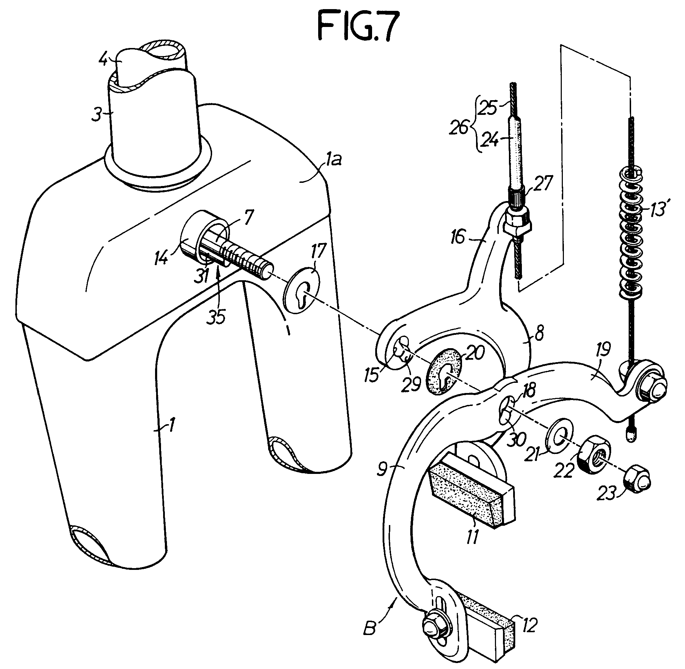

Figures 6 and 7 show still another embodiment of this invention with like reference numbers attached to the corresponding parts of the preceding embodiments.

A spring 13' that urges the pads 11, 12 of the two operating members 8, 9 to move away from each other is a coil spring instead of a torsion spring used in the preceding embodiments. The coil spring 13' is surrounding the inner cable 25 and interposed between the connecting arms 16 and 19 of the operating members 8 and 9. The load of the coil spring 13' is set to a small value so that even a little child can effect the braking.

With this embodiment, the ranges of pivotal movements of the operating members 8, 9 are restricted by the restriction means 35, so that the force of the spring 13' to urge the operating members 8, 9 can be small, allowing the brake to be operated with a relatively small force. This permits a reliable braking operation even when the caliper brake of this invention is applied to bicycles for infants.

This invention is not limited to the preceding embodiments and various modifications may be made within the range of the attached claims.

## Claims

1. A caliper brake for a vehicle, mounted on a body frame (1, 2, 3) of the vehicle and operable in response to the operation of an actuation member (L) on the vehicle body frame via a brake cable (26) to apply a braking force to a wheel (W) carried on the frame, said caliper brake comprising a pair of operating members (8, 9) disposed so as to straddle the wheel and provided with respective pads (11, 12), and a stationary support shaft (7) disposed on the frame to carry said pair of operating members pivotally thereon, wherein said pads on the operating members are normally biased by a resilient member (13; 13') in directions away from opposite side surfaces of the wheel and are capable of coming into frictional sliding contact with said opposite side surfaces upon operation of said actuation member, one of the operating members being connected with an end of an outer cable and the other operating member being connected with an end of an inner cable projecting from said outer cable,

characterized in that the brake is further provided with restriction means (35; 35'), the restriction means comprising restriction recesses (29, 30; 29', 30') provided on the respective operating members and a restriction portion (31; 32) formed integrally with the body frame (1) and inserted through said restriction recesses (29, 30; 29', 30'), said restriction portion and said restriction recesses being placed in abutment against each other when the braking force to the wheel (W) has been released such that the restriction means restricts pivotal movements of the operating members (8, 9) in directions in which the pads are moved away from one another and such that the restriction means determines positions of said pair of operating members (8, 9) relative to said vehicle body frame (1) upon release of a braking force applied by the operating members.

2. A caliper brake as claimed in claim 1, characterized in that the lengths (1) of said restriction recesses along the pivoting direction of the operating members are set greater than the width (d) of the restriction portion, whereby at the time of application of the bracking force to the wheel (W) the restriction recesses are free of contact with said restriction portion to permit the pivoting movements of the operating members around the support shaft (7; 17').

3. A caliper brake as claimed in claim 2, characterized in that said operating members (8, 9) are formed with respective support holes (15, 18), through which said support shaft (7) is inserted, and said restriction recesses (29, 30) are formed continuous with the respective support holes (15, 18).

4. A caliper brake as claimed in claim 2, characterized in that said operating members (8, 9) are formed with respective support holes (15, 18), through which said support shaft (17') is inserted, and said restriction recesses (29', 30') are formed separately from the respective support holes (15, 18).

5. A caliper brake as claimed in claim 4, characterized in that said restriction recesses (29', 30') are each formed to have a part of the side thereof open.

**Patentansprüche**

1. Eine Felgenbremse für ein Fahrzeug, die an einem Rahmengestell (1, 2, 3) des Fahrzeugs montiert und in Reaktion auf die Betätigung eines Betätigungselementes (L) am Fahrzeug-Rahmengestell über ein Bremskabel (26) betätigbar ist, um eine Bremskraft auf ein am Rahmen gehaltenes Rad (W) aufzubringen, welche Felgenbremse ein Paar Arbeitsglieder (8, 9), die mit jeweiligen Bremsblöcken (11, 12) versehen und so angeordnet sind, daß sie das Rad umgreifen, und eine feststehende Stützachse (7) umfaßt, die am Rahmen angeordnet ist, um die beiden Arbeitsglieder schwenkbar zu tragen, wobei die Bremsklötze an den Arbeitsgliedern normalerweise durch ein elastisches Element (13; 13') in Richtungen weg von einander abgewandten Seitenflächen des Rades beaufschlagt und dazu geeignet sind, bei Betätigung des Betätigungselementes in Reibungsgleitkontakt mit den einander abgewandten Seitenflächen zu gelangen, und wobei eines der Arbeitsglieder mit einem Ende eines Außenkabels verbunden und das andere Arbeitsglied mit einem Ende eines vom Außenkabel vorragenden Innenkabels verbunden ist,

dadurch gekennzeichnet, daß die Bremse ferner mit einer Begrenzungseinrichtung (35; 35') versehen ist, welche Begrenzungseinrichtung an den jeweiligen Arbeitsgliedern vorgesehene Begrenzungsvertiefungen (29, 30, 29', 30') und einen Begrenzungsteil (31; 32) umfaßt, der einteilig mit dem Rahmengestell (1) geformt und durch die Begrenzungsvertiefungen (29, 30; 29', 30') hindurchgeführt ist, wobei der Begrenzungsteil und die Begrenzungsvertiefungen derart in gegenseitiger Anlage angeordnet sind, wenn die Bremskraft am Rad (W) aufgehoben worden ist, daß die Begrenzungseinrichtung Schwenkbewegungen der Arbeitsglieder (8, 9) in Richtungen, in denen die Bremsklötze voneinander wegbewegt werden, begrenzt und daß die Begrenzungseinrichtung Stellungen der beiden Arbeitsglieder (8, 9) relativ zum Fahrzeug-Rahmengestell (1) bei Aufhebung einer durch die Arbeitsglieder aufgebrachten Bremskraft bestimmt.

2. Eine Felgenbremse nach Anspruch 1, dadurch gekennzeichnet, daß die Längenabmessungen (1) der Begrenzungsvertiefungen in Schwenkrichtung der Arbeitsglieder größer als die Breite (d) des Begrenzungsteils festgelegt sind, wodurch zum Zeitpunkt der Aufbringung der Bremskraft auf das Rad (W) die Begrenzungsvertiefungen außer Kontakt mit dem Begrenzungsteil sind, um die Schwenkbewegungen der Arbeitsglieder um die Stützachse (7, 17') zu ermöglichen.

3. Eine Felgenbremse nach Anspruch 2, dadurch gekennzeichnet, daß die Arbeitsglieder (8, 9) mit jeweiligen Stützöffnungen (15, 18) ausgebildet sind, durch die die Stützachse (7) hindurchgeführt ist, und die Begrenzungsvertiefungen (29, 30) zusammenhängend mit den jeweiligen Stützöffnungen (15, 18) geformt sind.

4. Eine Felgenbremse nach Anspruch 2, dadurch gekennzeichnet, daß die Arbeitsglieder (8, 9) mit jeweiligen Stützöffnungen (15, 18) ausgebildet sind, durch die die Stützachse (17') hindurchgeführt ist, und die Begrenzungsvertiefungen (29', 30') getrennt von den jeweiligen Stützöffnungen (15, 18) geformt sind.

5. Eine Felgenbremse nach Anspruch 4, dadurch gekennzeichnet, daß die Begrenzungsvertiefungen (29', 30') jeweils so geformt sind, daß ein Teil ihrer Seite offen ist.

## Revendications

1. Frein à étrier pour un véhicule, monté sur le cadre du châssis (1, 2, 3) du véhicule et manoeuvrable en réponse à la manoeuvre d'un élément d'actionnement (L) sur le cadre du châssis du véhicule au moyen d'un câble de frein (26) prévu pour appliquer un effort de freinage à une roue (W) portée par le cadre, ledit frein à étrier comportant une paire d'organes de manoeuvre (8, 9) disposés de manière à être en chevauchement sur la roue et munis de plaquettes respectives (11, 12) et d'un arbre support stationnaire (7) disposé sur le cadre pour porter pivotante ladite paire d'organes de manoeuvre, dans lequel lesdites plaquettes sur les organes de manoeuvre sont normalement poussées par un élément élastique (13 ; 13') dans des sens les éloignant des surfaces latérales opposées de la roue et qui sont en mesure de venir en contact glissant à frottement avec lesdites surfaces latérales opposées par la manoeuvre dudit élément d'actionnement, l'une des extrémités de l'un des organes de manoeuvre étant connectée à un câble extérieur, l'autre organe de manoeuvre étant connecté à une extrémité d'un câble intérieur déporté par rapport audit câble extérieur,

caractérisé en ce que le frein comporte en outre un moyen de restriction (35 ; 35'), le moyen de restriction comprenant des évidements de restriction (29, 30 ; 29', 30') prévus sur les organes de manoeuvre respectifs et une partie faisant restriction (31 ; 32) formée intégralement avec le cadre du châssis (1) et insérée à travers lesdits évidements de restriction (29, 30 ; 29', 30') ladite partie faisant restriction et lesdits évidements de restriction étant placés en butée l'un contre l'autre lorsque l'effort de freinage appliqué à la roue (W) a été relâché de telle sorte que le moyen de restriction limite les déplacements pivotants des organes de manoeuvre (8, 9) dans des sens dans lesquels les plaquettes s'éloignent l'une de l'autre et de telle sorte que le moyen de restriction détermine les positions de ladite paire d'organes de manoeuvre (8, 9) par rapport audit cadre du châssis du véhicule (1) lorsque l'effort de freinage appliqué aux organes de manoeuvre est relâché.

2. Frein à étrier selon la revendication 1, caractérisé en ce que les longueurs (1) desdits évidements de restriction le long de la direction de pivotement des organes de manoeuvre sont fixées supérieures à la largeur (d) de la partie faisant restriction, grâce à quoi lors de l'application de l'effort de freinage sur la roue (W), les évidements de restriction ne sont plus en contact avec ladite partie faisant restriction ce qui permet les mouvements pivotants des organes de manoeuvre autour de l'arbre support (7 ; 17').

3. Frein à étrier selon la revendication 2, caractérisé en ce que lesdits organes de manoeuvre (8, 9) sont formés avec des orifices support respectifs (15, 18) à travers lesquels est inséré l'arbre support (7), lesdits évidements de restriction (29, 30) étant formés en continuité avec les orifices support respectifs (15, 18).

4. Frein à étrier selon la revendication 2, caractérisé en ce que lesdits organes de manoeuvre (8, 9) sont formés avec des orifices support respectifs (15, 18) à travers lesquels est inséré ledit arbre support (17'), lesdits évidements de restriction (29', 30') étant formés séparément par rapport aux orifices support respectifs (15, 18).

5. Frein à étrier selon la revendication 4, caractérisé en ce que lesdits évidements de restriction (29', 30') sont chacun formés de manière à ce que leur côté comporte une partie ouverte.

# FIG.I

# FIG.2

FIG.3

EP 0 301 696 B1

FIG.4

FIG.5

EP 0 301 696 B1

# FIG.6

FIG.7